# EUROPÄISCHE PATENTSCHRIFT

(11) **EP 1 587 647 B1**
(45) Veröffentlichungstag und Bekanntmachung des Hinweises auf die Patenterteilung: **27.12.2006**
(21) Anmeldenummer: 04703154.7
(22) Anmeldetag: 19.01.2004
(51) Int. Cl.: B23Q 17/09, G01B 7/04, G01L 1/14

(54) **VORRICHTUNG UND VERFAHREN ZUR BESTIMMUNG DER BEANSPRUCHUNG EINES WERKZEUGS MIT DÜNNSCHICHTSENSOREN**
DEVICE AND METHOD FOR DETERMINING THE STRESS PLACED UPON A TOOL WITH THIN-LAYER SENSORS
DISPOSITIF ET PROCEDE POUR DETERMINER LA SOLLICITATION SUBIE PAR UN OUTIL AU MOYEN DE CAPTEURS A COUCHE MINCE

(30) Priorität: 29.01.2003 DE 10303425
(43) Veröffentlichungstag der Anmeldung: 26.10.2005
(73) Patentinhaber: Fraunhofer-Gesellschaft zur Förderung der angewandten Forschung e.V., 80686 München (DE); Technische Universität Braunschweig, 38106 Braunschweig (DE)
(72) Erfinder: LÜTHJE, Holger, 25469 Halstenbek (DE); SCHNETTKER, Thorsten, 38170 Dahlum (DE)
(86) Internationale Anmeldenummer: PCT/EP2004/000369
(87) Internationale Veröffentlichungsnummer: WO 2004/067225

(56) Entgegenhaltungen:
- EP-A- 0 685 297
- EP-A- 0 844 469
- EP-A- 1 057 586
- WO-A-03/025407
- DE-A- 10 029 953
- SPUR G ET AL: "NEUE WEGE BEI DER PROZESS-UEBERWACHUNG AN DREHMASCHINEN. \GLEICHZEITIGES ERFASSEN VON SPANN- UND ZERSPANKRAEFTEN MIT EINEM SENSOR" VDI Z, VDI VERLAG GMBH. DUSSELDORF, DE, Bd. 134, Nr. 12, 1. Dezember 1992 (1992-12-01), Seiten 50,53-56, XP000328554 ISSN: 0042-1766

## Beschreibung

Die Erfindung betrifft eine Vorrichtung und ein Verfahren zur Bestimmung der Beanspruchung und/oder des Zustands eines Werkzeugs. Die Anwendung der Erfindung liegt in der Überwachung von Zerspanungs- und Umformprozessen sowie Werkzeugen und Werkzeugmaschinen durch Bestimmung der auftretenden Belastung.

Die Verwendung von Dehnungsmessstreifen, welche auf der längenabhängigen Widerstandsänderung eines Materials basieren, ist bereits zur Bestimmung der Belastung einer Werkzeugaufnahme verwendet worden. Diese Messstreifen werden durch Klebung befestigt. Damit wird aus der Messung der auf die Werkzeugaufnahme einwirkenden Belastung die Bestimmung des Werkzeugzustands und der Beanspruchung möglich, ohne dass der Messwertaufnehmer im beanspruchten Bereich dem Verschleiß ausgesetzt ist. Nachteilig ist jedoch die Kriechneigung der Dehnungsmessstreifen aufgrund ihrer Klebung. Dieser Umstand beschränkt die Dynamik und die Genauigkeit der Messung erheblich. Auch ist die Empfindlichkeit eines solchen Sensors auf starren Trägern gering. Die große Bauhöhe einer solchen Anordnung führt zu notwendigen konstruktiven Änderungen an der zu überwachenden Vorrichtung.

Aus der DE 100 29 953 A1 ist ein Werkzeugspannsystem bekannt, welches einen Lagesensor als diskretes Bauteil enthält. Damit ist die Überprüfung von Fertigungstoleranzen im laufenden Betrieb der Maschine möglich.

Die EP 0 685 297 B1 beschreibt einen in Dünnschichttechnik in ein Werkzeug integrierten Sensor, welcher im spanabhebenden Bereich an der direkten Verschleißfläche des Werkzeugs angeordnet ist. Damit können Zerspanungsprozesse und Werkzeuge überwacht werden, wobei der eingesetzte Sensor über die Lebensdauer des Werkzeugs degeneriert und zusammen mit dem Werkzeug ersetzt werden muss.

Der Erfindung liegt das technische Problem zugrunde, die Beanspruchung und/oder den Zustand eines Werkzeugs und einer Werkzeugmaschine zu bestimmen, um die Überwachung von Zerspanungs- und Umformprozessen sowie den eingesetzten Werkzeugen zu ermöglichen. Dabei soll vorzeitiger Verschleiß der aufwändigen Dünnschichtsensorik vermieden werden. Vorteilhafterweise soll das Sensorsystem ohne großen Aufwand an vorhandenen Maschinen einsetzbar sein.

Das Problem wird gelöst durch eine Vorrichtung nach Anspruch 1 sowie durch ein Verfahren nach Anspruch 11.

Ein Werkzeug im Sinne dieser Erfindung ist ein Werkzeug mit geometrisch definierten oder geometrisch undefinierten Schneiden, wie z.B. Schleifscheiben, Bohrer, Fräser, Reibahlen oder Drehstähle. Darüber hinaus kann die Erfindung angewendet werden bei Werkzeugen für nicht-spanende Fertigungsprozesse wie Schneiden und Umformen.

Als Zustand des Werkzeugs im Sinne dieser Erfindung wird einerseits eine Unwucht bezeichnet, welche z.B. durch eine schlechte Fertigungsqualität des Werkzeugs, aus Fehlern an der Einspannung oder auch durch Bruch des Werkzeugs bedingt sein kann. Weiterhin werden unter dem Zustand Betriebsgrößen verstanden, wie z.B. Umformkräfte, Schnittkräfte oder Vorschubkräfte.

Bei der zu bestimmenden Beanspruchung handelt es sich um den Verschleiß des Werkzeugs, sei es durch Abnutzung oder Bruch. Der beanspruchte Bereich ist demnach die Wirkungszone, in welcher das Werkzeug mit dem Werkstück in Berührung ist.

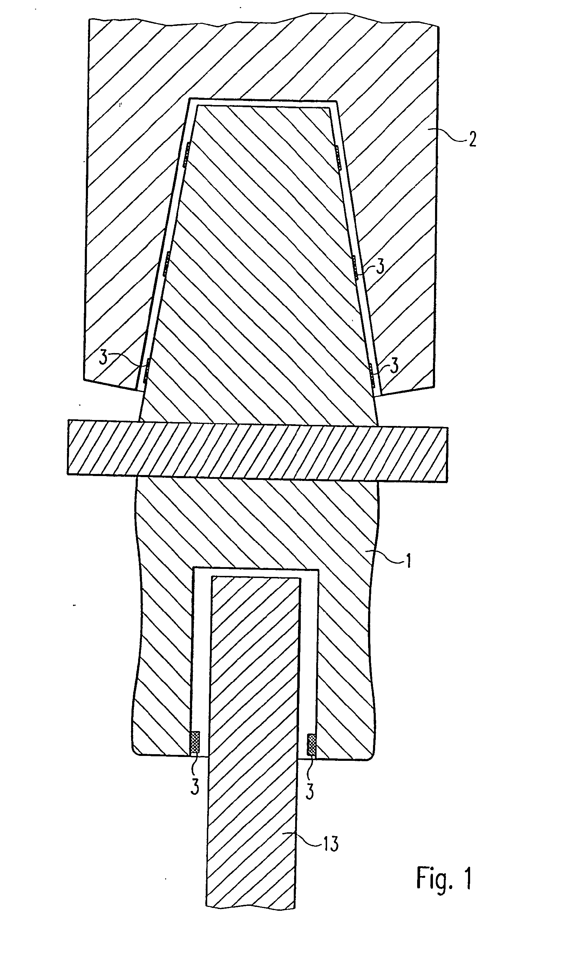

Fig. 1 zeigt beispielhaft eine kegelförmige Schnittstelle zwischen einem Spannwerkzeug 1 und einer Spindel 2 einer Werkzeugmaschine mit möglichen Anordnungen von Dünnschichtsensoren 3. Die Sensoren sind dabei an beschichtungstechnisch zugänglichen Stellen der Oberfläche angeordnet. Die Sensoren können dabei entweder zwischen dem Spannwerkzeug 1 und der Spindel 2 angeordnet werden oder aber am anderen Ende der Spindel. Ebenso können ein oder mehrere Dünnschichtsensoren zwischen dem Schaft eines Werkzeugs 13, wie z.B. einem Fräser, und dem Spannwerkzeug 1 eingesetzt werden. Die Anordnung des mindestens einen Sensors erfolgt im letzten Fall bevorzugt auf dem Spannwerkzeug.

Mögliche Spannwerkzeuge sind z.B. Spannzangen, Hydrodehnspannfutter, Schrumpfspannsysteme oder Morsekegel. Die Anordnung des mindestens einen Sensors erfolgt entweder an einem der beiden verbindbaren Teile oder beidseitig.

Der Sensor 3 selbst besteht aus einem Dünnschichtsystem, welches sensoraktive Strukturen und Leiterbahnen enthält. Die laterale Dimension dieser Strukturen kann bis zu wenigen Mikrometern herab reichen. Das Schichtsystem wird unter Anwendung von bekannten Verfahren zur Schichtabscheidung, wie Physical-Vapor-Deposition (PVD), Chemical-Vapor-Deposition (CVD) und Sputterverfahren, ohne Setzfugen direkt auf das Bauteil aufgebracht und kann mittels bekannter Strukturierungsverfahren, wie z.B. Laserstrukturierung, prozessiert werden.

Erfindungsgemäß wird die Beanspruchung und/oder der Zustand des Werkzeugs und der Werkzeugaufnahme aus einer gemessenen Lageveränderung bestimmt. Wird beispielsweise auf ein Werkzeug eine Kraft aufgebracht, so wird unter dem Einfluss dieser Kraft der Schaft in der Spannvorrichtung verschoben oder gedehnt. Eine solche Lageänderung kann nur wenige Nanometer betragen. Eine Kraft erfährt auch ein rotierendes Werkzeug, welches in Folge einer Beschädigung eine Unwucht aufweist und zu Schwingungen angeregt wird.

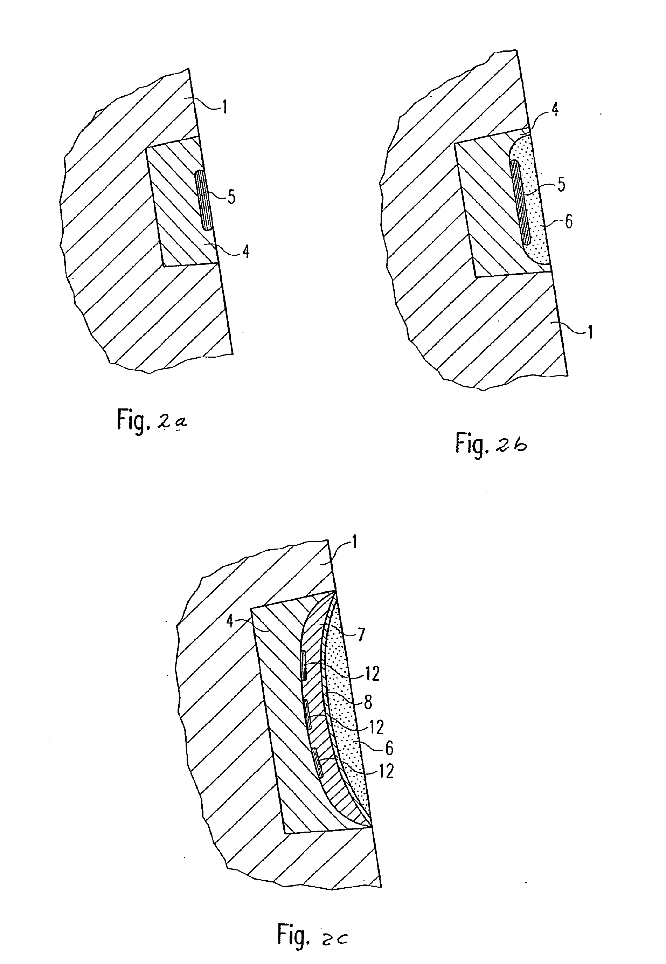

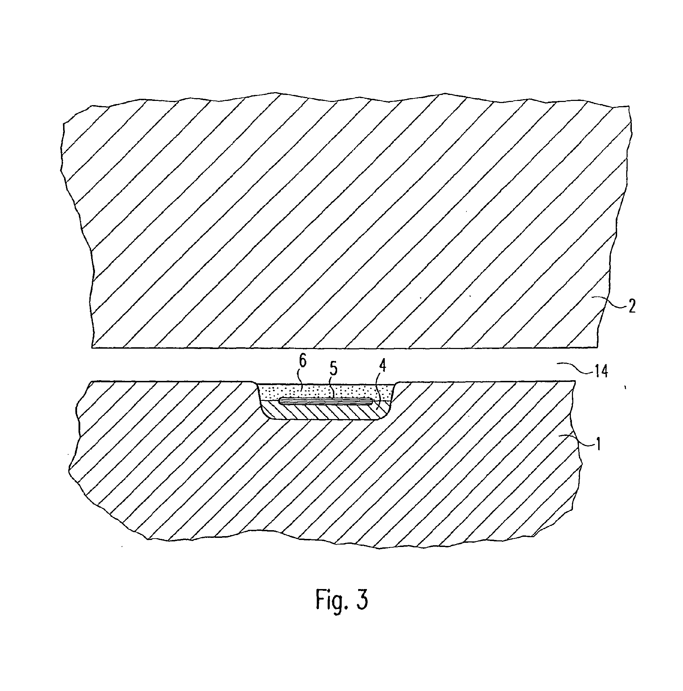

Dünnschichtsensoren eignen sich zur Bestimmung solcher Lageänderungen mit Genauigkeiten von wenigen Nanometern. Dazu eignet sich insbesondere die Messung mittels eines kapazitiven Sensors. Dabei wird an der beanspruchten Komponente mindestens ein metallischer Dünnschichtsensor angebracht. Der Aufbau wird in den Figuren 2a - 2c gezeigt. Die Sensorschicht 5 wird mit einer Isolatorschicht 4 vom Untergrund elektrisch isoliert und kann noch mit einer weiteren isolierenden Schutzschicht 6 bedeckt sein. Die Funktionsweise zeigt Fig. 3: Jeweils eine Sensorfläche 5 bildet mit einer gegenüberliegenden Metallfläche einen Plattenkondensator, dessen Kapazität mit dem Abstand 14 des Sensors variabel ist. Damit kann bei konstanter Spannung an den Sensoren der Stromfluss über die Anschlüsse gemessen und daraus ein Steuer- oder Regelsignal erzeugt werden. Wird ein solcher kapazitiver Sensor in eine konische Verbindungsfläche integriert, so ist die Kapazität der Sensoren eine Funktion der Axialkraft und der Radialkraft.

Bei der Ausführung eines kapazitiven Sensors wird vorteilhaft die oberste Schicht des Sensors tiefer angeordnet als die Anlagefläche, mit der das zu überwachende Bauteil an einer die Lage des Bauteils vorgebenden Befestigungsfläche anliegt. Dies hat den Vorteil, dass der Sitz des zu überwachenden Bauteils nicht durch die Sensorik verändert wird. Dazu werden zunächst mittels Mikroschleifen, Mikrofräsen, Laserätzung oder lithographischer Verfahren Ausnehmungen in dem Bauteil gefertigt. In diese Ausnehmungen können der Sensor 5 und die ihn verbindenden Leiterbahnen 12 mechanisch geschützt auf einer elektrischen Isolierung 4 eingebracht werden. Zusätzlich kann eine elektrische Abschirmung 8 eingebracht werden, welche von der Leiterbahn 12 mit einem weiteren Isolator 7 getrennt ist. Zum Schutz der Struktur kann eine weitere Isolierung 6 eingebracht werden.

Wird eine Mehrzahl von Dünnschichtsensoren 3 an der Umfangfläche einer zylindrischen oder kegelförmigen Befestigung angeordnet, lässt sich die relative Lageänderung der Bauteile mit nochmals höherer Empfindlichkeit bestimmen, siehe Fig. 1.

Die vorstehend beschriebene Verbesserung der Messung der Beanspruchung eines Werkzeugs erlaubt erstmalig auch die Kontrolle von Zerspanungsprozessen mit niedrigen Schnittkräften aber hohen Drehzahlen und Vorschubgeschwindigkeiten, wie z.B. in der Holzbearbeitung, ohne einen Sensor im spanabhebenden Bereich anzuordnen.

Die beschriebene Vorrichtung weist zusätzlich zu den Dünnschichtsensoren zur Erfassung der Beanspruchung und/oder des Zustands auch Mittel zur Verarbeitung des Sensorsignals auf. Diese können so ausgestaltet werden, dass eine wiederholte oder zyklische Messung der Beanspruchung erfolgt.

Die so bestimmte Änderung der Belastung mit der Zeit kann zur Regelung und/oder Steuerung eines Zerspanungsprozesses herangezogen werden. So kann beispielsweise die Vorschubgeschwindigkeit reduziert werden, wenn die Schnittkräfte am Werkzeug einen vorgebbaren Grenzwert überschreiten.

Indem durch kontinuierliche Überwachung eines Werkzeugs mit der erfindungsgemäßen Vorrichtung ein sich lösender Werkzeugschaft oder ein Bruch des Werkzeugs erkannt wird, kann die Maschine rechtzeitig in einen sicheren Betriebszustand gebracht werden. Die Sicherheit wird damit wunschgemäß erhöht.

Nachfolgend soll die Erfindung anhand eines Ausführungsbeispiels näher erläutert werden.

Die konische Oberfläche einer standardisierten Werkzeugaufnahme 1 wird mit kapazitiv messenden Sensoren 3 beschichtet. Zunächst werden Ausnehmungen für die Leiterbahnen und die Sensorflächen gem. Fig. 1 auf der Oberfläche der Werkzeugaufnahme ausgearbeitet. Dies erfolgt bevorzugt durch Mikroschleifen, Mikrofräsen, Laserätzen, lithographische Verfahren mit anschließender nasschemischer Prozessierung oder reaktives Ionenätzen. Die Ausnehmungen können in verschiedenen Bereichen unterschiedliche Tiefen aufweisen, so dass die Leiterbahnen 12 tiefer geführt werden als der Sensor 5 oder Multilayer mit mehreren übereinander liegenden Leiterbahnen und dazwischen liegender Isolierung eingebracht werden können.

In die so gebildete Ausnehmung wird dann unter Anwendung von Masken, z.B. der zur Herstellung der Ausnehmung benutzten Masken, eine Isolationsschicht abgeschieden. Mögliche Materialien sind Al₂O₃ oder AlN oder andere Isolatoren. Die Abscheidung erfolgt mit bekannten Verfahren wie chemical vapour deposition oder physical vapor deposition.

Im gleichen Beschichtungsvorgang kann dann ohne Brechen des zur Schichtabscheidung notwendigen Vakuums eine elektrisch leitende Schicht, z.B. TiN, TiAlN, Me:C-H, ein Metall oder eine Legierung ebenfalls durch die genannten Verfahren aufgebracht werden. Eine solche Schicht kann bei kapazitiver Messtechnik eine Elektrode als Sensorfläche 5 sein oder eine Leiterbahn 12.

Zum Schutz der aktiven Fläche kann eine weitere Isolationsschicht 6 aufgebracht werden. Ebenso kann eine Abschirmung 8 der Leiterbahnen 12 eingebracht werden um die elektromagnetische Verträglichkeit der Messanordnung zu erhöhen.

Insgesamt kann die vorher gefertigte Ausnehmung bis auf wenige Nanometer unter die vorherige Höhe aufgefüllt werden. Durch die verbleibende Vertiefung wird der Sitz des Werkzeugs durch die Beschichtung nicht verändert.

Die Schichtdicke der Isolationsschichten 4,6,7 beträgt etwa zwischen 0.5 und 1000 µm. Die Leiter- und Sensordicke 12 und 5 liegt in etwa zwischen 10 nm und 100 µm.

Die elektrische Ansteuerung der Sensoren und die Signalverarbeitung erfolgen in bekannter Weise durch eine elektronische Schaltung, welche zur Platzersparnis und der Vermeidung von Unwuchten ringförmig um die Werkzeugaufnahme angeordnet ist und eine telemetrische oder optische Datenübertragung der Messwerte an die Steuerung der Maschine bewirkt.

Ein handelsüblicher Fräser wird in die erfindungsgemäße Werkzeugaufnahme eingespannt. Ein unrunder Lauf bzw. eine Unwucht des Fräsers kann nun durch eine zyklische Signaländerung an den Sensorschichten nachgewiesen werden. In diesem Fall gibt die Maschine eine Warnung an den Benutzer aus oder begrenzt die Drehzahl des Fräsers. Im Falle besonders großer Unwuchten wird die Maschine gestoppt.

Hat der Fräser seine Solldrehzahl erreicht, kann dieser in gewohnter Weise gegen das Werkstück geführt werden. Durch die Belastung durch die Schnittkräfte entsteht in der Einspannung am Spannfutter eine Verschiebung. Diese wird nun während des Zerspanungsprozesses fortlaufend mit den kapazitiven Sensoren überwacht. Steigt die Verschiebung über einen Grenzwert an, wird zunächst die Vorschubgeschwindigkeit reduziert. Reicht auch dies nicht zu Reduktion der Schnittkräfte unter den Grenzwert aus, so ist der Fräser verschlissen und muss ersetzt werden. Die Maschine schaltet dann selbsttätig ab und gibt eine entsprechende Warnung an den Benutzer aus.

## Patentansprüche

1. Vorrichtung zur Bestimmung der Beanspruchung und/oder des Zustands eines Werkzeugs oder eines Spannwerkzeugs, aufweisend ein Spannwerkzeug und ein Werkzeug und/oder eine Spindel, bei welcher zur Bestimmung der Beanspruchung und/oder des Zustands ein Sensor im Bereich der Einspannung vorgesehen ist, mit welchem eine Lageveränderung messbar ist, **dadurch gekennzeichnet, dass** der Sensor einen Dünnschichtsensor (3) umfasst, welcher zwischen dem Spannwerkzeug (1) und der Spindel (2) und/oder zwischen dem Schaft (13) des Werkzeugs und dem Spannwerkzeug (1) angeordnet ist.

2. Vorrichtung nach Anspruch 1, **dadurch gekennzeichnet, dass** der Dünnschichtsensor ein kapazitiver Sensor ist.

3. Vorrichtung nach einem der Ansprüche 1 oder 2, daurch **gekennzeichnet**, dass die Lageveränderung eine radiale Lageveränderung ist.

4. Vorrichtung nach einem der Ansprüche 1 bis 3, **dadurch gekennzeichnet, dass** der Dünnschichtsensor in einer Spannzange, einem Hydrodehnspannfutter, einem Schrumpfspannsystem oder einem Morsekegel integriert ist.

5. Vorrichtung nach Anspruch 2, **dadurch gekennzeichnet, dass** der kapazitive Sensor aus einer Isolationsschicht und einer leitfähigen Schicht besteht.

6. Vorrichtung nach Anspruch 5, **dadurch gekennzeichnet, dass** die Isolationsschicht eine Dicke von etwa 0.5 µm bis etwa 1000 µm aufweist und die leitfähige Schicht eine Dicke von etwa 10 nm bis etwa 100 µm aufweist.

7. Vorrichtung nach einem der Ansprüche 1 bis 6, **dadurch gekennzeichnet, dass** die oberste Schicht des Sensors oder dessen Zuleitungen tiefer angeordnet sind als die Anlagefläche, mit der das zu überwachende Bauteil an einer die Lage des Bauteils vorgebenden Befestigungsfläche anliegt.

8. Vorrichtung nach einem der Ansprüche 1 bis 7, **dadurch gekennzeichnet, dass** zur Bestimmung der Lageveränderung eine Mehrzahl von Sensoren an der Umfangfläche einer zylindrischen oder kegelförmigen Befestigung angeordnet ist.

9. Vorrichtung nach einem der Ansprüche 1 bis 8, **dadurch gekennzeichnet, dass** Mittel zur Verarbeitung des Sensorsignals vorhanden sind.

10. Verwendung einer Vorrichtung nach einem der Ansprüche 1 bis 9 zur Holzbearbeitung.

11. Verfahren zur Bestimmung der Beanspruchung und/oder des Zustands eines Werkzeugs, **dadurch gekennzeichnet, dass** zur Bestimmung der Beanspruchung und/oder des Zustands mittels eines Dünnschichtsensors (3) eine Lageveränderung zwischen einem Spannwerkzeug (1) und einer Spindel (2) und/oder zwischen einem Werkzeugschaft (13) und dem Spannwerkzeug (1) gemessen wird.

12. Verfahren nach Anspruch 11, **dadurch gekennzeichnet, dass** eine wiederholte Messung der Lageveränderung vorgesehen ist.

13. Verfahren nach Anspruch 11 oder 12, **dadurch gekennzeichnet, dass** die gemessene Beanspruchung und/oder der Zustand des Werkzeugs zur Steuerung und/oder Regelung einer Werkzeugmaschine verwendet wird.

## Claims

1. Arrangement for determining the stress and/or the state of a tool or of a clamping tool, having a clamping tool and a tool and/or a spindle, in which a sensor is provided in the region of the clamping in order to determine the stress and/or the state, with which sensor a change in position can be measured, **characterized in that** the sensor comprises a thin film sensor (3) which is arranged between the clamping tool (1) and the spindle (2) and/or between the shank (13) of the tool and the clamping tool (1).

2. Arrangement according to Claim 1, **characterized in that** the thin film sensor is a capacitive sensor.

3. Arrangement according to either of Claims 1 and 2, **characterized in that** the change in position is a radial change in position.

4. Arrangement according to one of Claims 1 to 3, **characterized in that** the thin film sensor is integrated in a collet, a hydraulic expansion chuck, a shrink-fit clamping system or a Morse taper.

5. Arrangement according to Claim 2, **characterized in that** the capacitive sensor consists of an insulating film and a conductive film.

6. Arrangement according to Claim 5, **characterized in that** the insulating film has a thickness of about 0.5 µm to about 1000 µm and the conductive film has a thickness of about 10 nm to about 100 µm.

7. Arrangement according to one of Claims 1 to 6, **characterized in that** the uppermost film of the sensor or its feed lines are arranged deeper than the bearing surface with which the component to be monitored bears against a fastening surface predetermining the position of the component.

8. Arrangement according to one of Claims 1 to 7, **characterized in that**, to determine the change in position, a plurality of sensors are arranged on the circumferential surface of a cylindrical or conical fastening.

9. Arrangement according to one of Claims 1 to 8, **characterized in that** there are means for processing the sensor signal.

10. Use of an arrangement according to one of Claims 1 to 9 for woodworking.

11. Method of determining the stress and/or the state of a tool, **characterized in that**, to determine the stress and/or the state, a change in position between a clamping tool (1) and a spindle (2) and/or between a tool shank (13) and the clamping tool (1) is measured by means of a thin film sensor (3).

12. Method according to Claim 11, **characterized in that** repeated measurement of the change in position is provided.

13. Method according to Claim 11 or 12, **characterized in that** the measured stress and/or the state of the tool is used for the open-loop control and/or closed-loop control of a machine tool.

## Revendications

1. Dispositif pour déterminer la sollicitation et/ou l'état d'un outil ou d'un outil de serrage, comprenant un outil de serrage et un outil et/ou une broche, dans lequel pour déterminer la sollicitation et/ou l'état un capteur prévu dans la zone de serrage permet de mesurer un changement de position, le capteur comprenant un capteur à couche mince (3) disposé entre l'outil de serrage (1) et la broche (2) et/ou entre la tige (13) de l'outil et l'outil de serrage (1).

2. Dispositif selon la revendication 1,
**caractérisé en ce que**
le capteur à couche mince est un capteur capacitif.

3. Dispositif selon l'une des revendications 1 ou 2,
**caractérisé en ce que**
le changement de position est un changement de position radial.

4. Dispositif selon l'une des revendications 1 à 3,
**caractérisé en ce que**
le capteur à couche mince est intégré dans une pince de serrage, un mandrin de serrage hydro-expansible, un système de serrage par frettage ou un cône Morse.

5. Dispositif selon la revendication 2,
**caractérisé en ce que**
le capteur capacitif est composé d'une couche d'isolation et d'une couche conductrice.

6. Dispositif selon la revendication 5,
**caractérisé en ce que**
la couche d'isolation présente une épaisseur de 0,5 µm à 1 000 µm environ et la couche conductrice une épaisseur de 10 nm à 100 µm environ.

7. Dispositif selon l'une des revendications 1 à 6,
**caractérisé en ce que**
la couche supérieure du capteur ou les lignes d'alimentation de celui-ci sont disposées plus bas que la surface d'appui par laquelle le composant à surveiller est appliqué sur une surface de fixation déterminant la position du composant.

8. Dispositif selon l'une des revendications 1 à 7,
**caractérisé en ce que**
pour déterminer le changement de position, une multitude de capteurs est disposée sur la surface périphérique d'une fixation cylindrique ou conique.

9. Dispositif selon l'une des revendications 1 à 8,
**caractérisé par**
des moyens prévus pour traiter le signal de capteur.

10. Utilisation d'un dispositif selon l'une des revendications 1 à 9, pour l'usinage du bois.

11. Procédé pour déterminer la sollicitation et/ ou l'état d'un outil,
**caractérisé en ce que**
pour déterminer la sollicitation et/ou l'état au moyen d'un capteur à couche mince (3) on mesure un changement de position entre un outil de serrage (1) et une broche (2) et/ou entre une tige d'outil (13) et l'outil de serrage (1).

12. Procédé selon la revendication 11,
**caractérisé en ce qu'**
on répète une mesure du changement de position.

13. Procédé selon la revendication 11 ou 12,
**caractérisé en ce que**
la sollicitation mesurée et/ou l'état de l'outil est utilisé pour commander et/ou réguler une machine-outil.
